# EUROPEAN PATENT APPLICATION

(11) **EP 4 598 227 A1**
(43) Date of publication of application: **06.08.2025**
(21) Application number: 23873251.5
(22) Date of filing: 27.09.2023
(51) Int. Cl.: H04W 72/232, H04L 5/14, H04W 72/04, H04W 52/02

(54) **METHOD, USER EQUIPMENT, PROCESSING DEVICE, AND STORAGE MEDIUM FOR RECEIVING DOWNLINK SIGNAL, AND METHOD AND BASE STATION FOR TRANSMITTING DOWNLINK SIGNAL**

(30) Priority: 29.09.2022 US 202263411566 P
(71) Applicant: LG Electronics Inc., Yeongdeungpo-gu Seoul 07336 (KR)
(72) Inventor: MYUNG, Sechang, Seoul 06772 (KR); YANG, Suckchel, Seoul 06772 (KR); KIM, Seonwook, Seoul 06772 (KR); BAE, Duckhyun, Seoul 06772 (KR)
(74) Representative: Plasseraud IP
(86) International application number: PCT/KR2023/015105
(87) International publication number: WO 2024/072144

(57) **Abstract**

A UE may comprise: receiving a slot configuration for providing slot formats for slots, wherein each of the slot formats is at least a combination of downlink, uplink, or flexible symbols, performing PDCCH monitoring for a first DCI format related to a specific mode; determining, on the basis of detection of the first DCI format, symbols for the specific mode from among a specific type of symbols configured by the slot configuration, and operating in the specific mode in the symbols for the specific mode.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

Another object of the present disclosure is to provide methods and procedures for transmitting downlink signals to achieve network energy conservation.

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method of receiving a downlink signal by a user equipment (UE) in a wireless communication system is provided. The method may include receiving a radio resource control (RRC) configuration including a slot configuration providing slot formats for slots, each slot format being at least a combination of downlink, uplink or flexible symbols, performing physical downlink control channel (PDCCH) monitoring for a first downlink control information (DCI) format related to a specific mode, based on detecting the first DCI format, determining symbols for the specific mode from among a specific type of symbols configured by the slot configuration, and operating in the specific mode in the symbols for the specific mode.

According to another aspect of the present disclosure, a user equipment (UE) for receiving a downlink signal in a wireless communication system is provided. The UE may include at least one transceiver, at least one processor, and at least one computer memory operably connected to the at least one processor and storing instructions that, when executed, cause the at least one processor to perform operations. The operations include receiving a radio resource control (RRC) configuration including a slot configuration providing slot formats for slots, each slot format being at least a combination of downlink, uplink or flexible symbols, performing physical downlink control channel (PDCCH) monitoring for a first downlink control information (DCI) format related to a specific mode, based on detecting the first DCI format, determining symbols for the specific mode from among a specific type of symbols configured by the slot configuration, and operating in the specific mode in the symbols for the specific mode.

According to another aspect of the present disclosure, a processing device in a wireless communication system is provided. The processing device includes at least one processor, and at least one computer memory operably connected to the at least one processor and storing instructions that, when executed, cause the at least one processor to perform operations. The operations may include receiving a radio resource control (RRC) configuration including a slot configuration providing slot formats for slots, each slot format being at least a combination of downlink, uplink or flexible symbols, performing physical downlink control channel (PDCCH) monitoring for a first downlink control information (DCI) format related to a specific mode, based on detecting the first DCI format, determining symbols for the specific mode from among a specific type of symbols configured by the slot configuration, and operating in the specific mode in the symbols for the specific mode.

According to another aspect of the present disclosure, a computer-readable storage medium is provided. The storage medium may store at least one computer program code including instructions that, when executed, cause at least one processor to perform operations, and the operations may include receiving a radio resource control (RRC) configuration including a slot configuration providing slot formats for slots, each slot format being at least a combination of downlink, uplink or flexible symbols, performing physical downlink control channel (PDCCH) monitoring for a first downlink control information (DCI) format related to a specific mode, based on detecting the first DCI format, determining symbols for the specific mode from among a specific type of symbols configured by the slot configuration, and operating in the specific mode in the symbols for the specific mode.

According to another aspect of the present disclosure, a method of transmitting a downlink signal to a user equipment (UE) by a base station (BS) in a wireless communication system is provided. The method may include transmitting a radio resource control (RRC) configuration including a slot configuration providing slot formats for slots, each slot format being at least a combination of downlink, uplink or flexible symbols, performing physical downlink control channel (PDCCH) transmission for a first downlink control information (DCI) format related to a specific mode, and based on transmitting the first DCI format, operating in the specific mode in symbols for the specific mode from among a specific type of symbols configured by the slot configuration.

According to another aspect of the present disclosure, a base station (BS) for transmitting a downlink signal to a user equipment (UE) in a wireless communication system is provided. The BS includes at least one transceiver, at least one processor, and at least one computer memory operably connected to the at least one processor and storing instructions that, when executed, cause the at least one processor to perform operations. The operations may include transmitting a radio resource control (RRC) configuration including a slot configuration providing slot formats for slots, each slot format being at least a combination of downlink, uplink or flexible symbols, performing physical downlink control channel (PDCCH) transmission for a first downlink control information (DCI) format related to a specific mode, and based on transmitting the first DCI format, operating in the specific mode in symbols for the specific mode from among a specific type of symbols configured by the slot configuration.

According to each aspect of the present disclosure, the slot configured may be provided through a radio resource control (RRC) configuration.

According to each aspect of the present disclosure, the slot configuration may be determined via the RRC configuration and a second DCI format. Here, the RRC configuration may include a plurality of slot format combinations, and the second DCI format may include information indicating one of the plurality of slot format combinations.

According to each aspect of the present disclosure, the first DCI format may include information indicating the symbols for the specific mode.

According to each aspect of the present disclosure, the RRC configuration may include a configuration regarding the specific type.

According to each aspect of the present disclosure, each slot format is a combination of downlink, uplink, flexible and N symbols, and here, the N symbols may be symbols available for the specific mode.

According to each aspect of the present disclosure, the symbol type may include at least one of downlink, uplink or flexible.

According to each aspect of the present disclosure, the symbol type may include at least one of downlink, uplink, flexible or N.

According to each aspect of the present disclosure, the first DCI format may be received via a group-common PDCCH.

According to each aspect of the present disclosure, the first DCI format may include information about a time period during which the specific mode is ON, and symbols configured as the specific type by the slot configuration from among symbols within symbols in slots overlapping the time period may be determined as the symbols for the specific mode.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, energy saving methods and procedures for a network, base station (BS), and/or user equipment (UE) may be provided.

According to implementation(s) of the present disclosure, methods and procedures for transmitting a downlink signal may be provided to enable energy saving for a network, BS, and/or UE.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates slot structures available in a 3GPP-based system;
FIG. 7 illustrates a slot configuration via RRC signaling;
FIG. 8 illustrates predefined slot formats;
FIG. 9 illustrates slot format combinations;

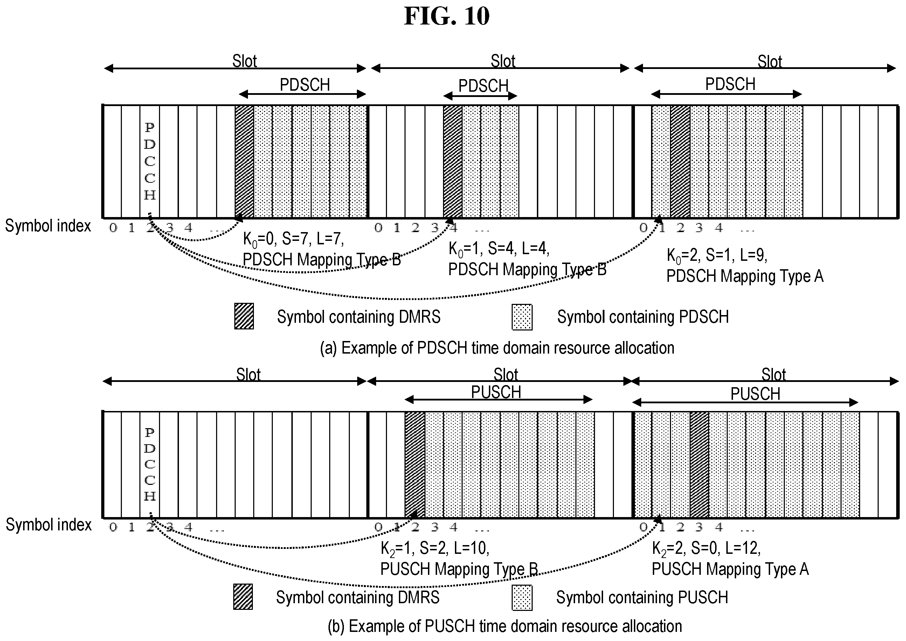

FIG. 10 illustrates an example of physical downlink shared channel (PDSCH) time domain resource assignment (TDRA) by a physical downlink control channel (PDCCH) and an example of physical uplink shared channel (PUSCH) TDRA by the PDCCH;
FIG. 11 illustrates a discontinuous reception (DRX) operation applicable to implementation(s) of the present disclosure,
FIG. 12 illustrates a flow of downlink (DL) signal reception by a user equipment (UE) according to some implementations of the present disclosure; and
FIG. 13 illustrates a flow of DL signal transmission by a base station (BS) according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMAmay be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

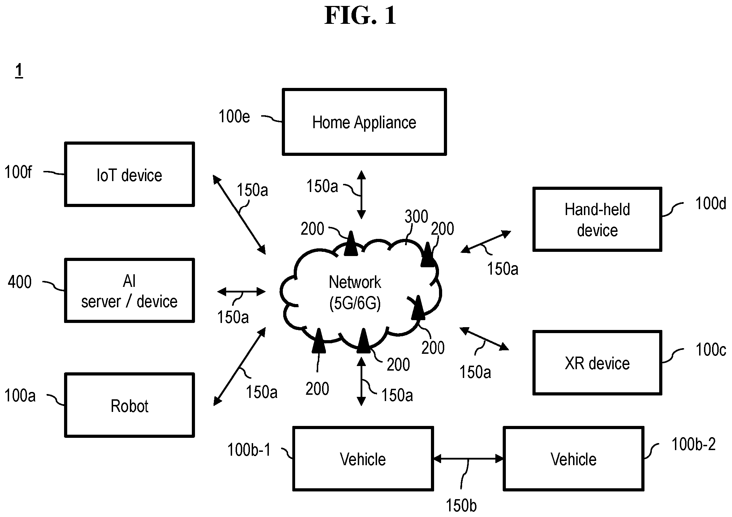

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

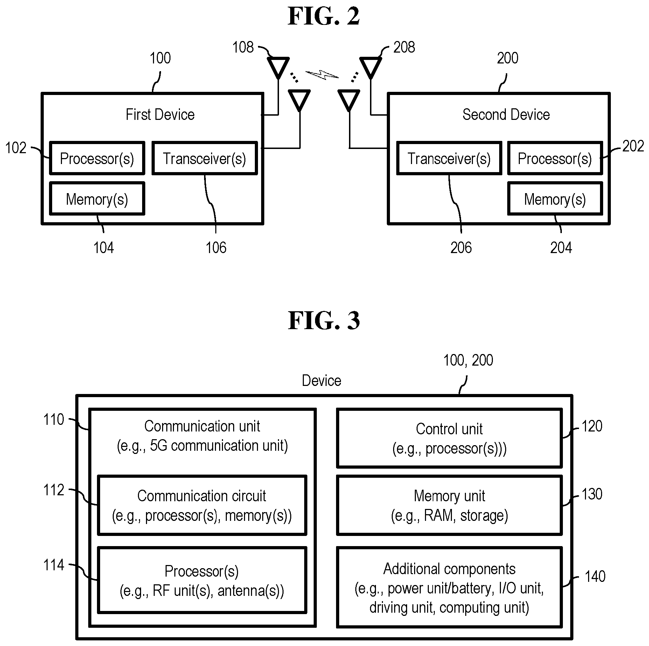

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

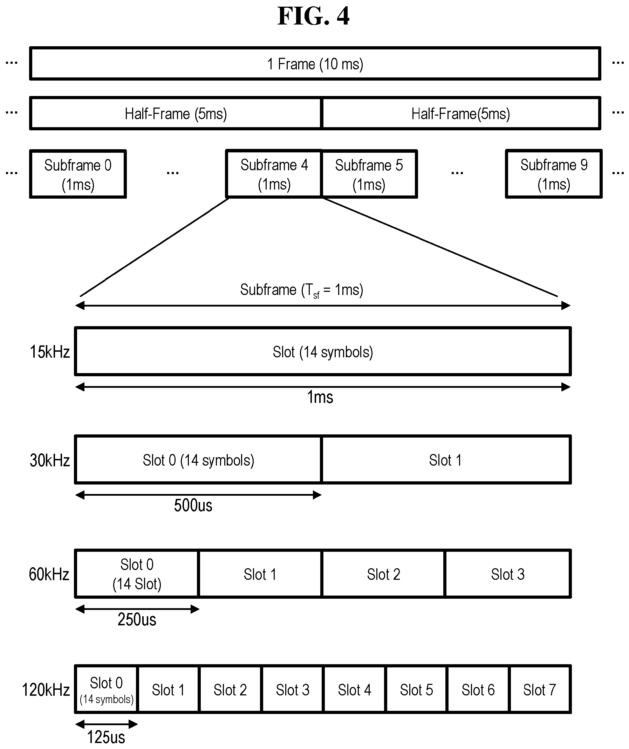

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (Δfₘₐₓ*Nr/100)*T_{c} = 10 ms and is divided into two half-frames of 5 ms each. A basic time unit for NR is T_{c} = 1/(Δfₘₐₓ*N_{f}) where △fₘₐₓ = 480*10³ Hz and N_{f} = 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant x = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (N^{frame,u}ₛₗₒₜ) per frame, and the number of slots (N^{subframe,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}ₛ,_{f} ∈ {0, ..., n^{ftame,u}ₛₗₒₜ - 1}.

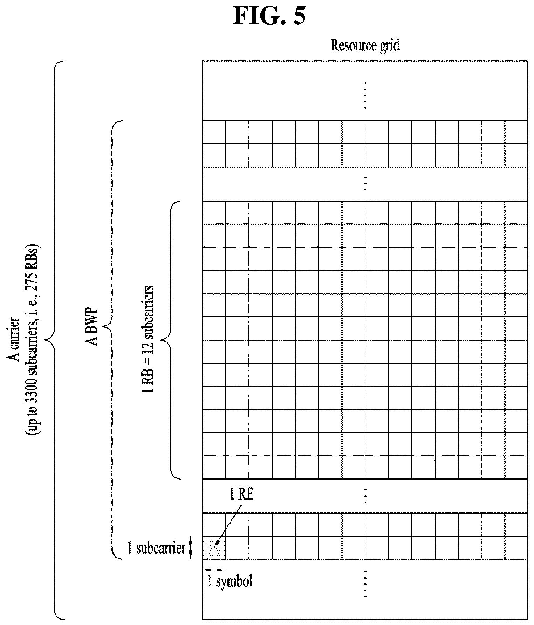

FIG. 5 illustrates a resource grid of a slot. The slot includes multiple (e.g., 14 or 12) symbols in the time domain. For each numerology (e.g., subcarrier spacing) and carrier, a resource grid of N^{size,u}_{grid,x}*N^{RB}_{sc} subcarriers and N^{subframe},^{u}_{symb} OFDM symbols is defined, starting at a common resource block (CRB) N^{start,u}_{grid} indicated by higher layer signaling (e.g. RRC signaling), where N^{size,u}_{grid,x} is the number of resource blocks (RBs) in the resource grid and the subscript x is DL for downlink and UL for uplink. N^{RB}_{sc}. is the number of subcarriers per RB. In the 3GPP-based wireless communication system, N^{RB}_{sc} is typically 12. There is one resource grid for a given antenna *port p,* a subcarrier spacing configuration *u,* and a transmission link (DL or UL). The carrier bandwidth N^{size,u}_{grid} for the subcarrier spacing configuration u is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u* is equal to 'Point A' which serves as a common reference point for RB grids. The PRBs for subcarrier spacing configuration u are defined within a bandwidth part (BWP) and numbered from 0 to N^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + N^{ize,u}_{BWP,i}, where N^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB N^{start}_{BWP} = *O*_{carrier} + RBₛₜₐᵣₜ and the number of contiguous RBs N^{size}_{BWP} = L_{RB} provided by an RRC parameter *locationAndBandwidth,* which indicates an offset REₛₑₜ and a length L_{RB} as a resource indicator value (RIV) on the assumption of N^{start}_{BWP} = 275, and a value O_{carrier} provided by an RRC parameter *offsetToCarrier* for the SCS; an index in the set of DL BWPs or UL BWPs; a set of BWP-common parameters; and a set of BWP-dedicated parameters.

Switching between configured BWPs may occur using RRC signaling, DCI, and/or an inactivity timer or during the initiation of random access. If the inactivity timer is configured for the serving cell, the expiration of the inactivity timer associated with the serving cell switches an active BWP to a default BWP configured by the network.

Virtual resource blocks (VRBs) may be defined within the BWP and indexed from 0 to N^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

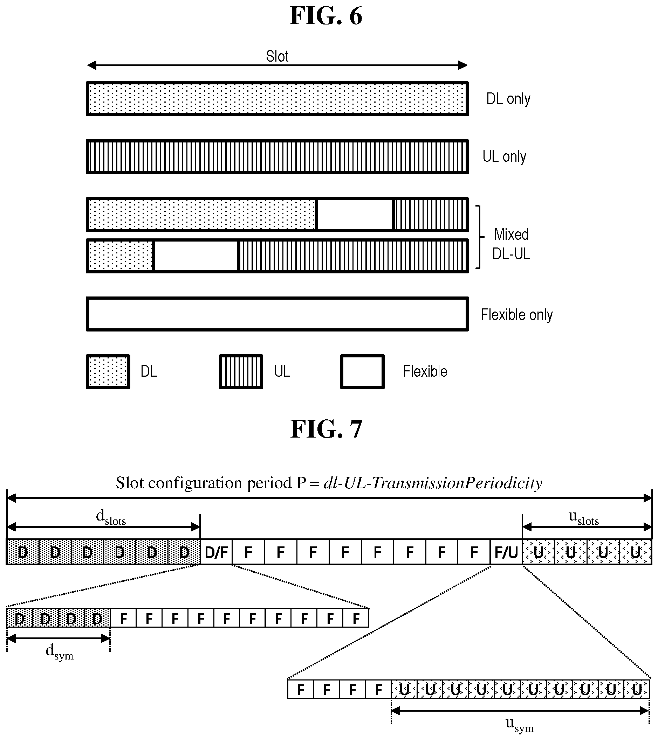

FIG. 6 illustrates slot structures used in a 3GPP-based system. In all 3GPP-based systems, for example, in an NR system, each slot may have a self-contained structure including i) a DL control channel, ii) DL or UL data, and/or iii) a UL control channel. For example, the first N symbols in a slot may be used to transmit the DL control channel (hereinafter, DL control region) and the last M symbols in a slot may be used to transmit the UL control channel (hereinafter, UL control region), where N and M are integers other than negative numbers. A resource region (hereinafter, data region) between the DL control region and the UL control region may be used to transmit DL data or UL data. Symbols in a single slot may be divided into group(s) of consecutive symbols that may be used as DL symbols, UL symbols, or flexible symbols. Hereinbelow, information indicating how each symbol in slot(s) is used will be referred to as a slot format. For example, which symbols in slot(s) are used for UL and which symbols in slot(s) are used for DL may be defined by a slot format.

A slot format may be configured in a static, semi-static or fully dynamic method. A static and semi-static slot configuration may be performed using RRC, and the dynamic slot configuration may be configured using PDCCH DCI. When a slot configuration is not provided by a network, all slots/symbols may be considered as flexible by default. The slot configuration via RRC may be obtained through *tdd-UL-DL-ConfigurationCommon* which provides a cell-specific DL/UL pattern to all UEs in a cell and/or *tdd-UL-DL-ConfigurationDedicated* which provides a UE-specific DL/UL pattern that modifies/allocates unallocated (flexible) slots and symbols by *tdd-UL-DL-ConfigurationCommon.*

For example, when a BS intends to operate a serving cell in time division duplex (TDD) mode, the BS may configure a pattern for UL and DL allocation for the serving cell through higher layer (e.g., RRC) signaling. For example, the following parameters may be used to configure a TDD DL-UL pattern:
- Reference subcarrier spacing used to determine time domain boundaries in the UL-DL pattern common across all subcarrier-specific carriers, independent of the actual subcarrier spacing used for data transmission;
- *dl-UL-TransmissionPeriodicity* that provides a periodicity of the DL-UL pattern;
- *nrofDownlinkSlots* that provides the number of consecutive full DL slots at the beginning of each DL-UL pattern, where the full DL slots are slots having only DL symbols;
- *nrofDownlinkSymbols* that provides the number of consecutive DL symbols at the beginning of a slot immediately following the last full DL slot;
- *nrofUplinkSlots* that provides the number of consecutive full UL slots at the end of each DL-UL pattern, where the full UL slots are slots having only UL symbols; and
- *nrofUplinkSymbols* that provides the number of consecutive UL symbols in the end of a slot immediately preceding the first full UL slot.

The remaining symbols that are not configured as either DL symbols or UL symbols among symbols in the DL-UL pattern are flexible symbols.

If the UE is provided with a configuration for the TDD DL-UL pattern, i.e., a TDD UL-DL configuration (e.g., *tdd-UL-DL-ConfigurationCommon,* or *tdd-UL-DLConfigurationDedicated),* through higher layer signaling, the UE sets a slot format per slot over a number of slots based on the configuration. When *tdd-UL-DL-ConfigurationDedicated* is not provided, the UE derives a slot configuration using only *tdd-UL-DL-ConfigurationCommon.*

FIG. 7 illustrates a slot configuration via RRC signaling. In an example of FIG. 7, it is assumed that a TDD UL-DL pattern is configured by the following parameters: reference subcarrier spacing configuration u = 3, *dl-UL-TransmissionPeriodicity* P = 2.5 ms, total number of slots = P*2^{u} = 20, *nrofDownlinkSlots* dₛₗₒₜₛ = *6, nrofUplinkSlots* uₛₗₒₜₛ = *4, nrofDownlinkSymbols* d_{sym} = *4, and nrofUplinkSymbols* u_{sym} = 10. In this case, a total number of slots = P*2^{u} = 20.

As described above, the slot configuration using RRC may be performed cell-specifically and/or UE-specifically, which may leave some flexible slots/symbols unallocated. The remaining flexible symbols may be dynamically reconfigured using Layer 1 signaling.

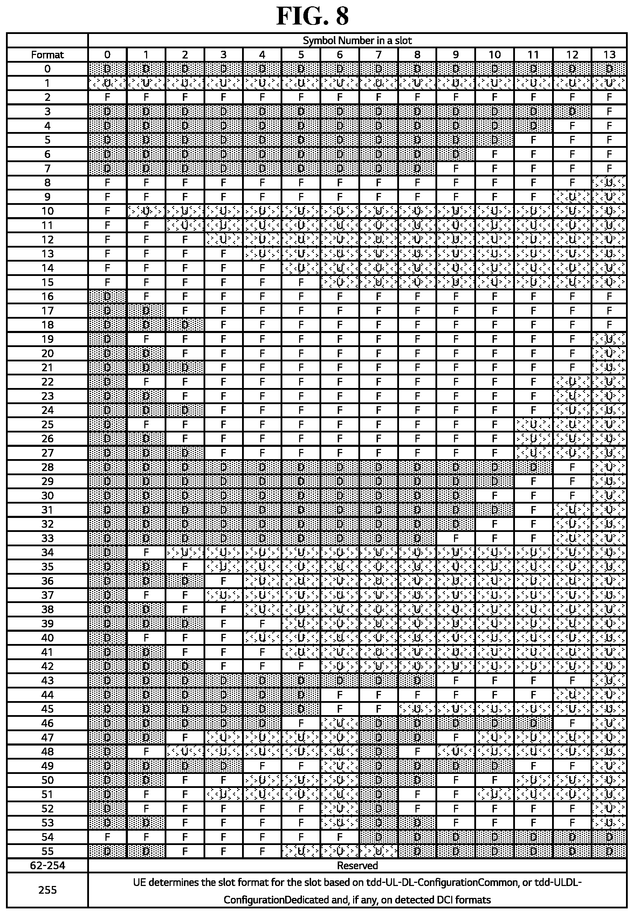

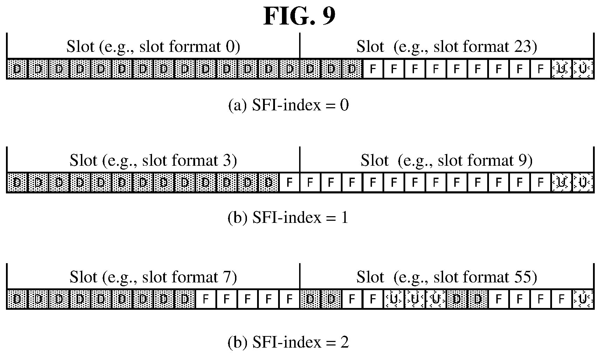

FIG. 8 illustrates defined slot formats, and FIG. 9 illustrates slot format combinations. In FIGS. 8 and 9, D denotes a DL symbol, U denotes a UL symbol, and F denotes a flexible symbol. Although the example of FIG. 9 illustrates cases in which the slot format combinations are combinations of two slot formats for two consecutive slots, each slot format combination in the present disclosure may be a combination of one or more slot formats (e.g., a slot format combination indicated by a combination of one or more slot format indices).

To indicate which slot format is used in a specific slot among the predefined slot formats, the BS may configure a set of slot format combinations applicable to a corresponding serving cell per cell with respect to a set of serving cells through higher layer (e.g., RRC) signaling (e.g. information element (IE) *SlotFormatIndicator)* and cause the UE to monitor a group-common PDCCH for slot format indicator(s) (SFI(s)) through higher layer (e.g., RRC) signaling. Hereinafter, DCI carried by the group-common PDCCH for the SFI(s) will be referred to as SFI DCI. DCI format 2_0 is used as the SFI DCI. For example, for each serving cell in a set of serving cells, the BS may provide the UE with the (start) position of a slot format combination ID (i.e., SFI-index) for a corresponding serving cell in the SFI DCI, a set of slot format combinations applicable to the serving cell, and a reference subcarrier spacing configuration for each slot format in a slot format combination indicated by an SFI-index value in the SFI DCI. One or more slot formats are configured for each slot format combination in the set of the slot format combinations and the slot format combination ID (i.e., SFI-index) is assigned to the slot format combination. For example, when the BS intends to configure the slot format combination with N slot formats, N slot format indexes among slot format indexes for the predefined slot formats may be indicated for the slot format combination. In order to configure the UE to monitor the group-common PDCCH for the SFIs, the BS informs the UE of an SFI-RNTI corresponding to an radio network temporary identifier (RNTI) used for an SFI and the total length of a DCI payload having CRC scrambled with the SFI-RNTI. The SFI-index field in the SFI DCI (e.g., DCI format 2_0) indicates to the UE a slot format for each slot within a number of slots for each DL BWP or each UL BWP, starting from a slot in which the UE detects the SFI DCI format, where the number of slots is greater than or equal to a PDCCH monitoring cycle for the SFI DCI. Upon detecting the PDCCH based on the SFI-RNTI, the UE may determine slot format(s) for the corresponding serving cell from an SFI-index for the serving cell among SFI-indexes in the DCI payload in the PDCCH. Referring to FIGS. 8 and 9, when slot format combinations as exemplified in FIG. 9 are configured for a serving cell, and SFI index = 0 is indicated for a serving cell through the SFI DCI, a UE receiving the SFI DCI may apply a slot format combination of SFI index = 0 for slots of the serving cell.

Symbols indicated as flexible symbols by the TDD DL-UL pattern configuration may be indicated as UL symbols, DL symbols, or flexible symbols by the SFI DCI. Symbols indicated as the DL/UL symbols by the TDD DL-UL pattern configuration are not overridden as the UL/DL symbols or the flexible symbols by the SFI DCI.

If the TDD DL-UL pattern is not configured, the UE determines whether each slot is used for UL or DL and determines symbol allocation in each slot based on the SFI DCI and/or on DCI for scheduling or triggering DL or UL signal transmission (e.g., DCI format 1_0, DCI format 1_1, DCI format 1_2, DCI format 0_0, DCI format 0_1, DCI format 0_2, or DCI format 2_3).

The UE may determine the slot format based on the following priorities for signals transporting the slot format-related information described above. For example, when a UE receives the slot format-related information through a plurality of signals, the UE considers indication information in the following order only for the purpose of identifying the usage of a symbol flexibly indicated by a signal with a higher priority: Slot format information via cell-specific higher layer signaling (e.g., TDD-UL-DL-ConfigurationCommon) > Slot format information via UE-specific higher layer signaling (e.g., TDD-UL-DL-ConfigDedicated) > Slot format information via group common PDCCH (e.g., DCI format 2_0) > UE-specific data transmission scheduling information > Measurement related scheduling information. Therefore, when a specific symbol within a slot is indicated in DL/UL to the UE via cell-specific RRC signaling or UE-specific RRC signaling, the UE does not expect that DCI format 2_0 (or group-specific PDCCH including DCI format 2_0) indicates UL/DL or flexibly for the specific symbol. When a specific symbol within a slot is indicated as flexible via DCI format 2_0 (or a group-specific PDCCH including DCI format 2_0), the UE transmits/receives a related signal in the specific symbol only when separate scheduling information (e.g., UE-specific scheduling DCI) is received, and does not perform signal transmission/reception in the specific symbol when separate scheduling information is not received.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using configured grants for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

FIG. 9 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value m for a row index m+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset K₀, a start and length indicator *SLIV* (or directly, a start position (e.g., start symbol index S) and an allocation length (e.g., the number of symbols, L) of the PDSCH in a slot), and a PDSCH mapping type. In PUSCH time domain resource configurations, each indexed row defines a UL grant-to-PUSCH slot offset K₂, a start position (e.g., start symbol index S) and an allocation length (e.g., the number of symbols, L) of the PUSCH in a slot, and a PUSCH mapping type. K₀ for the PDSCH and K₂ for the PUSCH indicate the difference between the slot with the PDCCH and the slot with the PDSCH or PUSCH corresponding to the PDCCH. *SLIV* denotes a joint indicator of the start symbol S relative to the start of the slot with the PDSCH or PUSCH and the number of consecutive symbols, *L,* counting from the symbol S. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

One or more CORESETs may be configured for the UE, and a plurality of CORESETs may overlap in the time/frequency domain. To configure a CORESET, the following parameters may be provided by the BS.
- controlResourceSetId: represents information on the identification (ID) of the CORESET.
- frequencyDomainResources: represents the frequency-domain resources of the CORESET and is indicated through a bitmap, where each bit corresponds to an RB group (= 6 consecutive RBs). For example, the MSB (Most Significant Bit) of the bitmap corresponds to the first RB group within a BWP. The RB group corresponding to a bit with a value of 1 is allocated as the frequency-domain resources of the CORESET.
- duration: represents the time-domain resources of the CORESET, and specifically, indicates the number of consecutive OFDMA symbols included in the CORESET. For example, duration may have a value ranging from 1 to 3.
- cce-REG-MappingType: represents a CCE-to-REG mapping type. Interleaved and non-interleaved types are supported.
- precoderGranularity: represents precoder granularity in the frequency domain.
- tci-StatesPDCCH: represents information regarding a transmission configuration indication (TCI) state for a PDCCH (e.g., TCI-StateID).
- tci-PresentInDCI: represents whether a TCI field is included in DCI.
- pdcch-DMRS-ScramblingID: represents information used for initialization of a PDCCH DMRS scrambling sequence.

The TCI state includes a quasi-co-location (QCL) relationship between one or more DL RSs and DM-RS ports of a PDSCH, DM-RS ports of a PDCCH, or CSI-RS ports of a CSI-RS resource. A TCI state index corresponding to each code point in a 'Transmission Configuration Indication' field among the fields in DCI that schedules the PDSCH is activated by a MAC control element (CE). A TCI state configuration for each TCI state index is performed through RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The following table shows PDCCH search spaces.

**Table 4**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: indicates the ID of the SS set.
- controlResourceSetId: indicates the CORESET associated with the SS set.
- monitoringSlotPeriodicityAndOffset: indicates a PDCCH monitoring periodicity (in a unit of slot) and a PDCCH monitoring offset (in a unit of slot).
- monitoringSymbolsWithinSlot: indicates first OFDMA symbol(s) for PDCCH monitoring in a slot in which the PDCCH monitoring is configured. The first OFDMA symbol(s) are indicated by a bitmap, and each bit corresponds to a respective one of OFDMA symbols in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: indicates the number of PDCCH candidates (e.g., one of 0, 1, 2, 3, 4, 5, 6, and 8) for each AL (where AL={1, 2, 4, 8, 16}).
- searchSpaceType: indicates whether the SS type is the CSS or USS.
- DCI format: indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

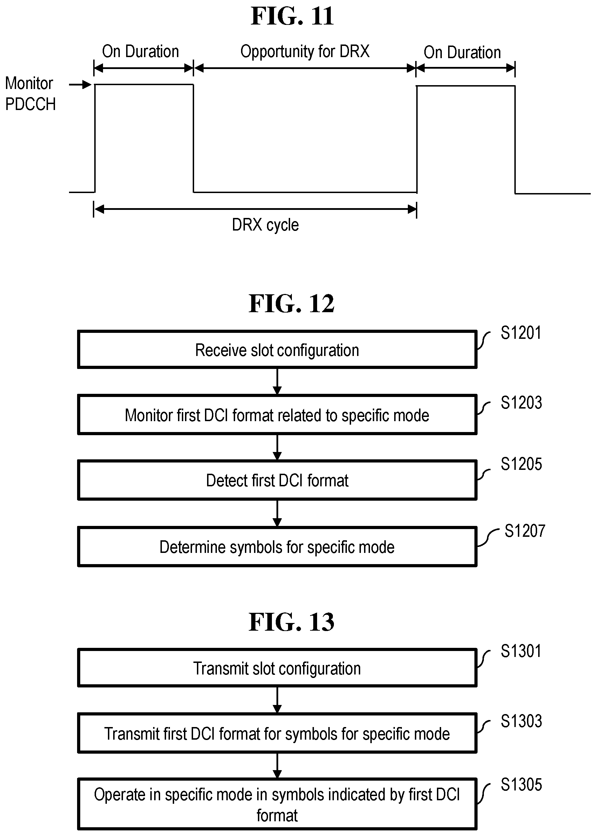

FIG. 11 illustrates a discontinuous reception (DRX) operation. Specifically, FIG. 11 shows a DRX cycle for a UE in the RRC_CONNECTED state.

The UE may perform the DRX operation while executing the processes and/or methods according to implementation(s) of the present disclosure. DRX configurations/operations are defined in NR specifications (e.g., Rel-17). DRX, which is used to reduce unnecessary power consumption of the UE, has the following features. In DRX, a structure for the UE in the RRC_IDLE state (hereinafter referred to as I-DRX) and a structure for the UE in the RRC_CONNECTED state (hereinafter referred to as C-DRX) are defined separately. The two DRX structures are designed such that a period (e.g., active time period or on-duration period) in which the UE expects to receive a DL signal periodically occurs, thereby reducing unnecessary power consumption of the UE in other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

Referring to FIG. 11, a DRX cycle includes an On Duration and an Opportunity for DRX. The DRX cycle defines a time interval between periodic repetitions of the On Duration followed by an inactivity possible period. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 8.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 11.

**Table 5**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. The active time here refers to a total duration during which the UE monitors the PDCCH. The active time may include the ON duration of a DRX cycle, the time when the UE performs continuous reception while the inactivity timer has not expired, and the time when the UE performs continuous reception while waiting for a retransmission opportunity. For example, when DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

The UE may be configured with one or multiple DRX groups through RRC signaling from the BS. For example, if two DRX groups are configured, each serving cell is uniquely assigned to one of the two DRX groups. The DRX parameters: drx-onDurationTimer and drx-InactivityTimer are configured separately for each DRX group. The DRX parameters: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL are common to the DRX groups. Since each serving cell belongs to only one of the DRX groups, and the DRX parameters drx-onDurationTimer and drx-InactivityTimer are configured for each DRX group, while the other DRX parameters are common to the DRX groups, it may be considered that the serving cell is associated with only one set of DRX parameters.

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

For efficient NES, a cell may need to be (dynamically) turned ON/OFF only during a specific time period and/or with a small resolution such as symbol level depending on a load condition of a BS. There is a need for a method that allows the BS to freely adjust a time period for transmission/reception on the cell without having to deactivate the cell for each UE or turn off the cell itself.

Hereinafter, implementations of the present disclosure that utilize multiple sleep modes will be described. For convenience of explanation, a sleep time or sleep duration during which the BS and/or UE operates in the sleep mode will be referred to as a non-active time/duration, inactive time/duration, or OFF time/duration.

In the following, the operation of the BS in the NES mode for the purpose of energy saving (ES) may mean that the BS preconfigures a plurality of OFF periods (i.e., discontinuous transmission (DTX) and/or DRX periods) where transmission of a specific DL signal and/or reception of a UL signal is turned off during a specific time period and then dynamically indicates one of the OFF periods to notify that the corresponding DL/UL signal will not be transmitted/received during the predefined time period, in order to achieve power consumption reduction for both the BS and UE. The NES mode may also be applied not only to the time domain but also to the following operations in the frequency domain: BWP switching, dynamic RB adaptation, etc. For the spatial domain, the NES mode may refer to an operation mode in which when the BS semi-statically or dynamically disables a specific receiving antenna port, the BS refrains from performing transmission and/or reception on the corresponding antenna port to achieve power consumption reduction for both the BS and UE.

Hereinafter, several implementations of the present disclosure are described that semi-statically configure a slot format similar to a slot format indicator (SFI) framework and indicate a time period during which the BS operates in an NES mode via a specific (group-common) DCI format, to operate the NES mode flexibly and/or dynamically. Hereinafter, some implementations of the present disclosure are described with regard to default operations when the UE misses a corresponding DCI format indicating a time period during which the BS operates in an NES mode.

Hereinafter, a NES symbol or N symbol may refer to a symbol in which the UE and BS operate in an NES mode (e.g., a symbol in which the UE and BS operate in DTX and/or DRX).

Hereinafter, D/U/F may refer to downlink, uplink and/or flexible, and D/U/F/N may refer to downlink, uplink, flexible and/or NES.

Information indicating how each symbol in a slot is used is referred to as a slot format. Hereinafter, slot format D, U, F or N (or slot format of D, U, F or N) may refer to downlink, uplink, flexible or an NES symbol.

In the following description, the term "DRX" is primarily used for convenience, but DRX from the perspective of the UE may correspond to DTX from the perspective of the network, and DRX from the perspective of the network may correspond to DTX from the perspective of the UE. Therefore, in some implementations described below, DRX may be a concept that includes DTX, and DTX may be a concept that includes DRX. In particular, while the NES mode operation of the BS is mainly described using the expression "DRX of the BS," transmission/reception that is turned off during the OFF duration in the NES mode of the BS may include not only DL signals/channels but also UL signals/channels. Thus, in the implementations of the present disclosure described later, DRX operation may involve turning off both transmission and reception operations as well as turning off reception or transmission operations.

<Method #1> Method in which a BS dynamically (e.g., in units of symbols) indicates a specific time period as **an** operating period of an NES mode through a specific (group-common) DCI format (however, the specific (group-common) DCI format may be an extension of existing DCI format 2_0, or a new (group-common) DCI format indicating whether **an** NES mode is ON or OFF) when slot format(s) (i.e., slot format(s) of D/U/F symbols within slot(s)) is configured semi-**statically** to UE **through a** (e.g., **cell-specific and** UE-specific) **higher** layer **signal such** as **RRC, and a time period** (e.g., **slot format) during which a** UE **and a BS operate in the NES** mode is expressed as **N**
> **A. Method** of **indicating** specific symbol(s) **from among D/U/F** symbols as **N** symbol(s) **through a** specific **DCI format in a slot format that** is **configured** to **D/U/F semi-statically.**
**>>i. Characteristically, when N can** be **configured in addition** to **a slot format** of **D/U/F, the BS** may **semi-statically configure a slot format** of N to **a minimum** (i.e., **when semi-statically configuring the slot format, the number** or **ratio** of N symbols is **configured** to **a minimum) and indicate** some of specific symbol(s) **from among D/U/F** symbols as **N** symbol(s) **through a** specific **DCI format.**
> **B. Method** of **changing** specific symbol(s) **from among D/U/F** symbols, **which overlap with a corresponding period,** to **N** symbol(s) by **indicating NES** mode = **ON period through** specific **DCI format in slot format that** is semi-**statically configured** as **D/U/F.**
**>>i. Characteristically, when N can** be **configured in addition** to **a slot format** of **D/U/F, the BS** may **semi-statically configure a slot format** of N to **a maximum** (i.e., **when semi-statically configuring the slot format, the number** or **ratio** of N symbols is **configured** to **a maximum) and indicate** some of N symbols as D/U(/F) symbol(s) **through a** specific **DCI format.**

As described with reference to FIGS. 6 to 9, the UE may receive a semi-static slot format from the BS through the parameters *tdd-UL-DL-ConfigurationCommon* and/or *tdd-UL-DL-ConfigurationDedicated* and determine a slot format through a slot format indicator (SFI) in the DCI format 2_0. In this case, a type of the slot format includes downlink (D), uplink (U), and flexible (F).

The BS may save energy by turning off transmission/reception of a specific DL or UL signal and channel during a specific time period in which little or no data is expected to be transmitted/received, controlling the amount of frequency domain resources to transmit/receive the DL or UL signal and channel, controlling the number of transmission (TX) radio units (RUs), or switching to an NES mode to control transmission power. The BS may configure/indicate the UEs with a time period with NES mode=ON to perform transmission/reception operations for energy saving that is previously agreed/configured with the BS during the corresponding time period. In this case, in some implementations of the present disclosure, the BS may semi-statically configure slot format(s) (for consecutive slot(s)) to the UE via (cell-specific and/or UE-specific) higher layer signaling such as RRC, similar to the existing SFI framework, and when a time period (e.g., slot format) for operating in an NES mode is expressed as N, the BS may dynamically indicate a specific time period as an NES mode operating period via a specific (group-common) DCI format. In this case, the specific (group-common) DCI format may be an extension of the existing DCI format 2_0, or a new (group-common) DCI format that indicates whether the NES mode is ON or OFF. For example, when the BS configures a TDD UL-DL pattern for consecutive slots via *tdd-UL-DL-ConfigurationCommon* and/or *tdd-UL-DL-ConfigurationDedicated* and indicates a slot format combination via a specific (group-common) DCI format, the UE may determine that the symbols indicated as N by the indicated slot format combination are a NES mode operating period (e.g., DTX and/or DRX period) from among symbols indicated as D, U and/or F in *tdd-UL-DL-ConfigurationCommon* and/or *tdd-UL-DL-ConfigurationDedicated.* In some implementations, when *tdd-UL-DL-ConfigurationCommon* and/or *tdd-UL-DL-ConfigurationDedicated* are not provided, the UE may consider all slots/symbols as flexible and determine that symbols indicated as N are a NES mode operation period (e.g., DTX and/or DRX period) by a slot format combination indicated via a specific (group-common) DCI format. As another example, symbol(s) of a predefined/configured specific type(s) from among D/U/F symbols i) configured via *tdd-UL-DL-ConfigurationCommon* and/or *tdd-UL-DL-ConfigurationDedicated* or ii) indicated via *SlotFormatIndciator* and DCI format 2_0 may be a time period operating in an NES mode according to a new (group-common) DCI format indicating that the NES mode is ON.

Through SFI via the existing DCI format 2_0, the BS may indicate D/U/F for the remaining F slot formats (i.e. symbol(s) configured as F) that are not semi-statically configured as D/U to UEs, thereby causing the UE to perform the slot direction or the transmission/reception operation described above on a symbol-by-symbol basis. However, for a time period operating in an NES mode, in some implementations of the present disclosure, the BS may indicate N via a specific DCI format for all slot formats configured as D/U/F (i.e., all symbols configured as D/U/F) in addition to the slot format configured as F (i.e., symbol(s) configured as F). In other words, a subset of sets of symbols configured as D and/or U, as well as a subset of symbols configured as F via a semi-static configuration (e.g., RRC configuration), may be indicated as N via a specific DCI format. In this case, for example, according to the previous definition/agreement/configuration, N may be indicated for all slot formats from among the slot formats configured as D/U/F, or N may be indicated only for a specific slot format from among D/U/F. For example, it may be previously defined/agreed/configured that D and N may be indicated as N through a specific DCI format from among symbol types of D, U, and F, and in this case, symbols indicated as N through the specific DCI format may be determined as a time period for an NES mode from among symbols configured as downlink and flexible through *tdd-UL-DL-ConfigurationCommon* and/or *tdd-UL-DL-ConfigurationDedicated.*

In some implementations of the present disclosure, in addition to the slot format including only D/U/F, a semi-static slot format N may also be configured. For example, N may be configured semi-statically for symbols within a slot, as well as D, U, or F. In this case, in some implementations, the BS may semi-statically provide a slot configuration (e.g., TDD UL-DL pattern) in which the N slot format has a relatively small proportion, and may indicate some of specific symbol(s) from among the D/U/F symbols as N symbol(s) through a specific DCI format. For example, when a slot is to be semi-statically configured to include D symbols, UL symbols, F symbols, as well as N symbols, the BS may provide (via cell-specific or UE-specific RRC signaling) a slot configuration with relatively small proportion of N symbols when semi-statically configuring D, U, F and N symbols for one or more consecutive slot(s), and may indicate some of the D, U and F symbols as N via a specific DCI format. In this case, for example, in addition to symbols that are semi-statically configured as N, symbols that are indicated as N by the specific DCI format may be determined as a time period of the NES mode. This may mean that the BS considers a mode in which the BS minimizes a time period of the NES mode and operates as a default mode of operation (default mode). Therefore, when it is previously agreed/configured that an operation according to a slot format configured semi-statically is a default operation when the UE misses (e.g., fails to receive or decode) a specific DCI format indicating a slot format of N (i.e., N symbol(s)), a time period during which the UE operates in the NES mode may be minimized. Conversely, the method may be one of configuration methods for a BS to operate primarily in a non-NES mode (also called a normal mode), i.e., to operate primarily in a normal BS operation mode. For example, in some scenarios, a period and a number of DL symbols and a number of UL symbols in the corresponding period are semi-statically specified via *tdd-UL-DL-ConfigurationCommon* and/or *tdd-UL-DL-ConfigurationDedicated,* the remaining symbols are defined as F symbols, and there may be UEs configured to monitor SFI for F symbols and UEs not, and in such scenarios, as UE default operations, a UE configured to monitor SFI may follow the SFI when detecting the SFI, and perform PDCCH monitoring when not detecting the SFI, but may not perform UL/DL transmission/reception configured semi-statically (e.g., via RRC signaling), and a UE not configured to monitor the SFI may be defined to perform UL/DL transmission/reception configured semi-statically in F symbols. According to the UE default operation according to these scenarios, when N symbols are semi-statically configured (via *tdd-UL-DL-ConfigurationCommon* and/or *tdd-UL-DL-ConfigurationDedicated),* the N symbols may be a time period during which the UE and BS always operate in an NES mode regardless of SFI via DCI format, and therefore, a BS that wants to operate in the NES mode only if necessary may operate by semi-statically configuring a small number of N symbols and indicating some of the semi-statically configured D, U and F symbols as N via dynamic SFI only if necessary.

In some implementations, the BS may semi-statically configure slot format(s) of D/U/F to the UE as before (e.g., configure TDD UL-DL pattern via *tdd-UL-DL-ConfigurationCommon* and/or *tdd-UL-DL-ConfigurationDedicated,* and may change specific symbol(s) from among D/U/F symbols overlapping with the corresponding period to N symbols by indicating NES mode = ON period via a specific DCI format. For example, specific symbol(s) (e.g., D symbol, U symbol, F symbol, D and U symbols, U and F symbols, or D and F symbols) that overlap with the NES mode = ON period from among the D/U/F symbols configured via *tdd-UL-DL-ConfigurationCommon* and/or *tdd-UL-DL-ConfigurationDedicated* may be determined to be N symbol(s). Here, the type (D, U and/F) of the specific symbol(s) determined to be N when overlapping with the NES mode = ON period may be predefined or preconfigured. In this case, in some implementations, the specific DCI format may be a new (group-common) DCI format for indicating ON/OFF of the NES mode of the BS, or an extension of an existing (group-common) DCI format. The BS may indicate NES mode=ON period by indicating one of a plurality of time period candidates that are semi-statically agreed/configured previously (e.g., specified in a standard document) via the specific (group-common) DCI format or by indicating one of a plurality of timer candidates that are semi-statically agreed/configured previously (e.g., specified in a standard document). Based on the corresponding indication, the UE may perform a pre-agreed NES mode operation by changing specific symbol(s) from among the D/U/F symbols overlapping with a period indicated as NES mode = ON to N symbol(s). In this case, according to the agreement/configuration in advance, N may be indicated for all slot formats from among the slot formats of D/U/F, or N may be indicated only for a specific slot format from among D/U/F. For example, when it is previously agreed (e.g., specified in a standard document) and/or configured (via RRC signaling) that a subset of symbols configured (or indicated) as D and F may be indicated as N via layer-1 signaling (e.g., DCI), the UE may determine the D and F symbols that overlap with the NES mode = ON period from among symbols configured/indicated as D and F as the period of symbols for the NES mode.

In some implementations, characteristically, when a semi-static slot format N is to be also configured in addition to a slot format including only D/U/F, the BS may semi-statically provide a slot configuration in which the slot format of N has a relatively large proportion (e.g., TDD U-DL pattern) and indicate an NES mode = ON period through a specific DCI format to indicate that some specific symbol(s) from among the D/U/F symbols are in the slot format of N. For example, when a slot is to be semi-statically configured to include D symbols, UL symbols, F symbols, as well as N symbols, the BS may provide (via cell-specific or UE-specific RRC signaling) a slot configuration with relatively high proportion of N symbols when semi-statically configuring D, U, F and N symbols for one or more consecutive slot(s), and may indicate some of the D, U and F symbols as N via a specific DCI format. In this case, for example, in addition to the symbols configured as N semi-statically, symbols indicated as N through the specific DCI format from among the D/U/F symbols configured as N semi-statically may be determined to be a time period of the NES mode. Alternatively, in some implementations, when N is to be configured semi-statically as well as D, U, or F for symbols in slot(s), the BS may configure N symbols to be relatively more semi-statically and indicate some of the N symbols configured semi-statically as D/U(/F) symbol(s) through a specific DCI format. For example, when a slot is to be semi-statically configured to include D symbols, UL symbols, F symbols, as well as N symbols, the BS may provide (via cell-specific or UE-specific RRC signaling) a slot configuration with relatively high proportion of N symbols when semi-statically configuring D, U, F and N symbols for one or more consecutive slot(s), and may indicate that some of the semi-statically configured N symbols are D/U(/F) through a specific DCI format. In this case, for example, the remaining N symbols excluding the symbol(s) indicated as D/U(/F) by the DCI format from among the N symbols configured semi-statically may be determined to be a time period of the NES mode. This may mean that the BS considers a mode in which the BS operates with the NES mode time period maximized, as a default mode. Therefore, when it is previously agreed/configured that the UE operates in the NES mode as a default operation when missing a specific DCI format indicating the slot format of N (e.g., fails to receive or decode the DCI), a time period during which the UE operates in the NES mode may be maximized. Conversely, this may be one of configuration methods to make the default operation of the BS to operate in the NES mode for energy saving rather than a normal BS operation mode in which the BS operates in a non-NES mode. For example, in some scenarios, a period and a number of DL symbols and a number of UL symbols in the corresponding period are semi-statically specified via *tdd-UL-DL-ConfigurationCommon* and/or tdd-UL-DL-ConfigurationDedicated, the remaining symbols are defined as F symbols, and there may be UEs configured to monitor SFI for F symbols and UEs not, and in such scenarios, as UE default operations, a UE configured to monitor SFI may follow the SFI when detecting the SFI, and perform PDCCH monitoring when not detecting the SFI, but may not perform UL/DL transmission/reception configured semi-statically (e.g., via RRC signaling), and a UE not configured to monitor the SFI may be defined to perform UL/DL transmission/reception configured semi-statically in F symbols. According to the UE default operation according to these scenarios, when N symbols are semi-statically configured (via *tdd-UL-DL-ConfigurationCommon* and/or tdd-UL-DL-ConfigurationDedicated), the N symbols may be a time period during which the UE and BS always operate in an NES mode regardless of SFI via DCI format, and therefore, a BS that wants to operate in the NES mode as much as possible may operate by semi-statically configuring as many N symbols as possible and indicating some of the N symbols as D, U, or F only if necessary.

<Method #2> UE basic operation method in a case in which DCI format 2_0 including SFI is not received for a slot format configured semi-statically as N (or F) or DCI is not received during a monitoring occasion (MO) of a (group-common) DCI format that indicates NES mode ON/OFF when a slot format of D/U/F is configured and a time period (e.g., slot format) operating in an NES mode is N
>A. When there is a separate (group-common) DCI monitoring occasion for each time (T) / frequency (F) / space (S) / power (P) domain and the UE does not receive DCI in a MO of a specific domain,
>>i. Method in which a UE performs an NES operation indicated through the last (group-common) DCI for the corresponding domain or applies a default operation configured/agreed previously (e.g. defined in a standard document).
>>ii. Method of falling back to non-NES operation for the corresponding domain (however, when a time period after a MO in which the UE does not receive the DCI is a NES mode operation time period pre-configured or indicated by the BS, pre-configured NES techniques for a specific domain may be applied.)
> **B. When** there is no separate (group-common) DCI monitoring occasion for each time (T) / frequency (F) / space (S) / power (P) domain (i.e., when an NES operation of all domains is indicated in one MO), and the UE does not receive the DCI,
>>i. Method in which a UE performs an NES operation indicated through the last (group-common) DCI for each domain or applies a default operation configured/agreed previously (e.g. defined in a standard document).
>>ii. Method of falling back to a non-NES mode (i.e., NES mode = OFF), which is a normal operation mode for all domains (however, when a time period after the MO in which the UE does not receive DCI is a NES mode operation time period pre-configured or indicated by the BS, pre-configured NES techniques of a specific domain may be applied.)
> C. When there is a separate (group-common) DCI monitoring occasion for each NES technique group and the UE does not receive DCI in the MO of a specific NES technique group,
>>i. Method of applying the corresponding NES technique(s) indicated through the last (group-common) DCI (e.g., indicated in the immediately preceding MO) for the group of NES techniques or applying a default operation that is previously configured/agreed (e.g., defined in a standard document)
>>ii. Method of turning off an application of NES techniques belonging to the corresponding NES techniques group
>>iii. Method of falling back to a non-NES operation, which is a normal operation mode
>>iv. However, when a time period after an MO in which the UE fails to receive the DCI in ii and iii is an NES mode operation time period preconfigured or indicated by the BS, the NES techniques (groups) preconfigured may be applied, and the group of NES techniques may include a single NES technique.
> D. In a situation in which there is no separate MO for the (group-common) DCI format for each NES technique group (i.e., in a situation in which the DCI format that indicates the NES operation of all NES technique groups needs to be transmitted in one MO), when the UE does not receive the DCI that indicates the NES operation,
>>i. Method of applying the corresponding NES technique(s) indicated through the last (group-common) DCI (indicated in the immediately preceding MO) for each NES technique group or applying a default operation that is previously configured/agreed (e.g., defined in a standard document)
>>ii. Method of falling back to a normal operating mode, non-NES mode (i.e. NES mode = OFF). However, when a time period after an MO in which the UE fails to receive the DCI in ii is an NES mode operation time period preconfigured or indicated by the BS, the NES techniques (groups) preconfigured may be applied, and the group of NES techniques may include a single NES technique.
> E. The UE may maintain the methods until an MO immediately following an MO where the UE does not receive DCI, apply the methods for a previously agreed/configured time period and fall back to a normal operation mode which is a non-NES mode, or maintain the last indicated operation until otherwise indicated.
> Method of notifying BS of non-reception through specific UL signal/channel (e.g. PRACH/PUCCH/SRS/CG-PUSCH) resources that are previously agreed/configured when (group-common) DCI is not received in MO
> Method of turning off all transmission/reception except for a positioning reference signal (PRS) for a slot format configured as semi-static N, similar to when SFI is not received for a slot format configured as semi-static F

The BS may semi-statically configure U/D/F for symbols within a slot through cell-specific or UE-specific signaling, and dynamically indicate to UEs configured to monitor DCI format 2_0 that a symbol configured as flexible is one of D/U/F. For a symbol configured as F, in the case of a UE that is not configured to monitor SFI, DL/UL configured via RRC may be transmitted/received, and in the case of a UE that is configured to monitor SFI, 1) when SFI is not received, only PDCCH monitoring is performed, and 2) when SFI is received and flexible is indicated, DL/UL configured via RRC, including PDCCH monitoring, is not transmitted/received.

As in the method #1 described above, when the BS semi-statically configures a slot format of D/U/F to the UE and a time period (e.g., slot format) for operating in the NES mode is N, if a time period for operating in the NES mode is indicated through a DCI format 2_0 including SFI or through the (group-common) DCI format indicating NES mode ON/OFF for a slot format (e.g., symbols) semi-statically configured as N (or F), a default operation of the UE needs to be defined as in the case in which a UE with SFI monitoring configured does not receive the SFI as described above when the DCI is not received in the corresponding monitoring occasion (MO).

The UE may be pre-configured with operations for energy saving for each T/F/S/P domain when receiving an NES mode = ON instruction from the BS. For example, the UE may be preconfigured (e.g. via RRC signaling) not to perform transmission on a configured grant PUSCH resource included during a specific time period when NES mode = ON, or to perform BWP switching to a pre-agreed BWP for NES, or to perform transmission/reception using only some RBs of a BW of an active BWP of the current UE. Alternatively, the UE may be preconfigured with operations for energy saving for when NES mode = ON is indicated for each domain, such as turning off a previously agreed specific antenna port or transmitting with lowered transmission power, may be previously configured for the UE(s).

There may be a separate (group-common) DCI monitoring occasion for each T/F/S/P domain, or a NES mode indication for all domains or specific domain(s) may be performed in one MO. When a separate MO is present for each domain and the UE does not receive DCI in a MO corresponding to a specific domain, the UE may perform an NES operation indicated through the last (group-common) DCI for the domain, or apply a default operation that is previously configured/agreed (e.g., defined in a standard document) (e.g., a default NES operation mode that is previously configured/agreed (e.g., defined in a standard) for each domain). Alternatively, it is possible for the UE to fall back to a non-NES operation for the corresponding domain in which the UE does not receive DCI. However, when a time period for performing fallback after the MO in which DCI is not received is a NES mode operation time period that is previously configured or indicated by the BS (for example, a time period in which a slot format of N is semi-statically configured or a NES mode operation time period indicated by a group-common DCI), NES techniques of a specific domain that is previously configured may be applied.

When there is no separate MO of the (group-common) DCI format for each T/F/S/P domain (i.e., when NES operations of all domains are indicated in one MO) and the UE does not receive DCI in the MO, the UE may perform the NES operation indicated through the last (group-common) DCI for each domain, or apply a default operation that is previously configured/agreed (e.g., defined in a standard document). In this case, the default operation may mean, for example, a default NES operation mode that is previously configured/agreed (e.g. defined in the standard) for each domain. Alternatively, when DCI is not received in an MO, it is possible to fall back to a non-NES mode (i.e. NES mode = OFF), which is a normal operating mode for all domains. However, when a time period for performing fallback after the MO in which DCI is not received is a NES mode operation time period that is previously configured or indicated by the BS (for example, a time period in which a slot format of N is semi-statically configured or a NES mode operation time period indicated by a group-common DCI in the method #1 described above), NES techniques of a specific domain that is previously configured may be applied.

Instead of instructing the UE to use NES techniques by T/F/S/P domain through (group-common) DCI, the BS may pre-configure NES technique groups by grouping NES techniques and configure a (group-common) DCI monitoring occasion separately by NES technique groups. Here, the NES technique group may include two NES techniques that skip transmission on pre-configured semi-static resources, such as grant PUSCH for a certain time period, and utilize only half the antenna ports compared to the non-NES mode. In this case, when the UE does not receive DCI in an MO of a specific NES technique group, the UE may apply the NES technique(s) indicated (in the immediately previous MO) via the last (group-common) DCI for the corresponding NES technique group or apply a default operation previously configured/agreed (e.g. defined in a standard document). Alternatively, it is possible to turn off and operate only the NES techniques belonging to the group of NES techniques indicated in the MO. Another method may be a method of falling back to the normal operation mode, non-NES operation, and here, when a time period after an MO in which DCI is not received is a NES mode operation time period pre-configured or indicated by the BS, pre-configured NES techniques (groups) may be applied.

When there is no separate MO in the (group-common) DCI format for each NES technique group (i.e., when NES operations of all NES technique groups are indicated in one MO) and the UE does not receive the DCI, the NES technique(s) indicated through the last (group-common) DCI ( in the immediately previous MO) for each NES technique group or a default operation previously configured/agreed (e.g., defined in a standard document) may be applied. Alternatively, the UE may fall back to the normal operation mode, non-NES mode (i.e., NES mode = OFF), but if the time interval after the MO in which DCI is not received is a NES mode operation time interval pre-configured or indicated by the BS (e.g., a semi-static N slot format or a NES mode operation interval indicated via a specific group-common DCI), then the pre-agreed/configured default NES techniques (groups) may be applied.

The UE may maintain the methods until an MO immediately following an MO that does not receive DCI or apply the methods for a previously agreed/configured time period and fall back to a normal operation mode, a non-NES mode or maintain the last indicated operation until otherwise indicated. It may be difficult for the BS to know whether the UE properly receives DCI transmitted by the BS, and thus when the UE does not receive the (group-common) DCI in an MO, the BS may be notified of non-reception through a specific UL signal/channel (e.g., PRACH/PUCCH/SRS/CG-PUSCH) resource that is previously agreed/configured. Similarly to not receiving SFI for a slot format that is semi-statically configured as F, a method of turning OFF all transmission/reception except PRS for a slot format that is semi-statically configured as N may also be considered.

The methods #1 and #2 described above may be applied alone or in combination of two or more.

According to some implementations of the present disclosure, sleep modes or DRX configurations may be applied at various levels depending on the situation of the BS, and thus energy of the BS and UE may be operated more efficiently.

According to some implementations of the present disclosure, the BS may semi-statically configure a time period previously during which the BS may operate in an energy saving mode and a signal/channel to turn off transmission/reception during the corresponding period, and dynamically indicates through group-common DCI whether to operate in the energy saving mode or not depending on an actual cell situation, thereby enabling a quick response when urgent data traffic occurs.

According to some implementations of the present disclosure, the BS may control energy usage in more detail by using an SFI-like framework.

Additionally, according to some implementations of the present disclosure, energy saving for the BS or network may be achieved while minimizing the impact on data communication between the UE and BS.

FIG. 12 illustrates a flow of DL signal reception by a UE according to some implementations of the present disclosure.

The UE may perform operations according to some implementations of the present disclosure in association with DL signal receptions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

Referring to FIG. 12, in the method performed by the UE, the UE, the processing device, the computer-readable (non-transitory) storage medium, and/or the computer program product, the operations may include receiving a slot configuration providing slot formats for slots (S1201). Here, each slot format may be at least a combination of downlink, uplink or flexible symbols. The method or the operations may include performing physical downlink control channel (PDCCH) monitoring for a first downlink control information (DCI) format related to a specific mode (S1203). The method or the operations may include determining symbols for the specific mode from among symbols of a specific type configured by the slot configuration (S1207) based on detecting the first DCI format (S1205). The method or the operations may include operating in the specific mode on the symbols for the specific mode.

In some implementations, the slot configuration may be provided via an RRC configuration.

In some implementations, the slot configuration may be determined via the RRC configuration and a second DCI format. Here, the RRC configuration may include a plurality of slot format combinations, and the second DCI format may include information indicating one of the plurality of slot format combinations.

In some implementations, the first DCI format may include information indicating the symbols for the specific mode.

In some implementations, the RRC configuration may include a configuration regarding the specific type.

In some implementations, each slot format is a combination of downlink, uplink, flexible and N symbols, and here, the N symbols may be symbols available for the specific mode.

In some implementations, the symbol type may include at least one of downlink, uplink or flexible.

In some implementations, the symbol type may include at least one of downlink, uplink, flexible or N.

In some implementations, the first DCI format may be received via a group-common PDCCH.

In some implementations, the first DCI format may include information about a time period during which the specific mode is ON, and determining symbols for the specific mode may include determining symbols configured to the specific type by the slot configuration from among symbols in slots overlapping a time period as the symbols for the specific mode.

FIG. 13 illustrates a flow of DL signal transmission by a BS according to some implementations of the present disclosure.

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

Referring to FIG. 13, in the method performed by the BS, the BS, the processing device, the computer-readable (non-transitory) storage medium, and/or the computer program product, the operations may include transmitting a slot configuration providing slot formats for slots (S1301). Here, each slot format may be at least a combination of downlink, uplink or flexible symbols. The method or the operations may include performing physical downlink control channel (PDCCH) transmission for a first downlink control information (DCI) format related to a specific mode (S1303). The method or the operations may include operating in the specific mode in symbols for the specific mode from among symbols of a specific type configured by the slot configuration based on transmitting the first DCI format (S1305).

In some implementations, the slot configuration may be provided via an RRC configuration.

In some implementations, the slot configuration may be determined via the RRC configuration and a second DCI format. Here, the RRC configuration may include a plurality of slot format combinations, and the second DCI format may include information indicating one of the plurality of slot format combinations.

In some implementations, the first DCI format may include information indicating the symbols for the specific mode.

In some implementations, the RRC configuration may include a configuration regarding the specific type.

In some implementations, each slot format is a combination of downlink, uplink, flexible and N symbols, and here, the N symbols may be symbols available for the specific mode.

In some implementations, the symbol type may include at least one of downlink, uplink or flexible.

In some implementations, the symbol type may include at least one of downlink, uplink, flexible or N.

In some implementations, the first DCI format may be transmitted via a group-common PDCCH.

In some implementations, the first DCI format may include information about a time period during which the specific mode is ON, and symbols configured as the specific type by the slot configuration from among symbols within symbols in slots overlapping the time period may be determined as the symbols for the specific mode.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of receiving a downlink signal by a user equipment (UE) in a wireless communication system, the method comprising:
receiving a radio resource control (RRC) configuration including a slot configuration providing slot formats for slots, each slot format being at least a combination of downlink, uplink or flexible symbols;
performing physical downlink control channel (PDCCH) monitoring for a first downlink control information (DCI) format related to a specific mode;
based on detecting the first DCI format, determining symbols for the specific mode from among a specific type of symbols configured by the slot configuration; and
operating in the specific mode in the symbols for the specific mode.

2. The method of claim 1, wherein the first DCI format includes information indicating the symbols for the specific mode.

3. The method of claim 1, wherein the RRC configuration includes a configuration for the specific type.

4. The method of claim 1, wherein each slot format is a combination of downlink, uplink, flexible and N symbols, the N symbols being symbols available for the specific mode.

5. The method of claim 3, wherein the symbol type includes at least one of downlink, uplink or flexible.

6. The method of claim 4, wherein the symbol type includes at least one of downlink, uplink, flexible or N.

7. The method of claim 1, wherein the first DCI format is received via a group-common PDCCH.

8. The method of claim 1, wherein the first DCI format includes information regarding a time period during which the specific mode is ON, and
wherein determining the symbols for the specific mode includes determining, as the symbols for the specific mode, symbols configured as the specific type by the slot configuration from among symbols in slots overlapping with the time period.

9. A user equipment (UE) for receiving a downlink signal in a wireless communication system, the UE comprising:
at least one transceiver;
at least one processor; and
at least one computer memory operably connected to the at least one processor and storing instructions that, when executed, cause the at least one processor to perform operations including:
receiving a radio resource control (RRC) configuration including a slot configuration providing slot formats for slots, each slot format being at least a combination of downlink, uplink or flexible symbols;
performing physical downlink control channel (PDCCH) monitoring for a first downlink control information (DCI) format related to a specific mode;
based on detecting the first DCI format, determining symbols for the specific mode from among a specific type of symbols configured by the slot configuration; and
operating in the specific mode in the symbols for the specific mode.

10. A processing device in a wireless communication system, the processing device comprising:
at least one processor; and
at least one computer memory operably connected to the at least one processor and storing instructions that, when executed, cause the at least one processor to perform operations including:
receiving a radio resource control (RRC) configuration including a slot configuration providing slot formats for slots, each slot format being at least a combination of downlink, uplink or flexible symbols;
performing physical downlink control channel (PDCCH) monitoring for a first downlink control information (DCI) format related to a specific mode;
based on detecting the first DCI format, determining symbols for the specific mode from among a specific type of symbols configured by the slot configuration; and
operating in the specific mode in the symbols for the specific mode.

11. A computer-readable storage medium storing at least one computer program code including instructions that, when executed, cause at least one processor to perform operations, the operations comprising:
receiving a radio resource control (RRC) configuration including a slot configuration providing slot formats for slots, each slot format being at least a combination of downlink, uplink or flexible symbols;
performing physical downlink control channel (PDCCH) monitoring for a first downlink control information (DCI) format related to a specific mode;
based on detecting the first DCI format, determining symbols for the specific mode from among a specific type of symbols configured by the slot configuration; and
operating in the specific mode in the symbols for the specific mode.

12. A method of transmitting a downlink signal to a user equipment (UE) by a base station (BS) in a wireless communication system, the method comprising:
transmitting a radio resource control (RRC) configuration including a slot configuration providing slot formats for slots, each slot format being at least a combination of downlink, uplink or flexible symbols;
performing physical downlink control channel (PDCCH) transmission for a first downlink control information (DCI) format related to a specific mode; and
based on transmitting the first DCI format, operating in the specific mode in symbols for the specific mode from among a specific type of symbols configured by the slot configuration.

13. A base station (BS) for transmitting a downlink signal to a user equipment (UE) in a wireless communication system, the BS comprising:
at least one transceiver;
at least one processor; and
at least one computer memory operably connected to the at least one processor and storing instructions that, when executed, cause the at least one processor to perform operations including:
transmitting a radio resource control (RRC) configuration including a slot configuration providing slot formats for slots, each slot format being at least a combination of downlink, uplink or flexible symbols;
performing physical downlink control channel (PDCCH) transmission for a first downlink control information (DCI) format related to a specific mode; and
based on transmitting the first DCI format, operating in the specific mode in symbols for the specific mode from among a specific type of symbols configured by the slot configuration.

14. The BS of claim 13, wherein the first DCI format includes information indicating the symbols for the specific mode.

15. The BS of claim 13, wherein the RRC configuration includes a configuration for the specific type .

16. The BS of claim 13, wherein each slot format is a combination of downlink, uplink, flexible and N symbols, the N symbols being symbols available for the specific mode.

17. The BS of claim 15, wherein the symbol type includes at least one of downlink, uplink or flexible.

18. The BS of claim 16, wherein the symbol type includes at least one of downlink, uplink, flexible or N.

19. The BS of claim 13, wherein the first DCI format is transmitted via a group-common PDCCH.

20. The BS of claim 13, wherein the first DCI format includes information about a time period during which the specific mode is ON, and
wherein symbols configured as the specific type by the slot configuration from among symbols in slots overlapping with the time period are determined as the symbols for the specific mode.
